# EUROPÄISCHE PATENTSCHRIFT

(11) **EP 2 663 160 B1**
(45) Veröffentlichungstag und Bekanntmachung des Hinweises auf die Patenterteilung: **13.07.2016**
(21) Anmeldenummer: 12401087.7
(22) Anmeldetag: 10.05.2012
(51) Int. Cl.: H05B 6/64, G01K 1/02, F24C 7/08

(54) **Hausgerät**
Domestic appliance
Appareil ménager

(43) Veröffentlichungstag der Anmeldung: 13.11.2013
(73) Patentinhaber: Miele & Cie. KG, 33332 Gütersloh (DE)
(72) Erfinder: Pöhler, Eckhard, 33775 Versmold (DE); Scharmann, Jürgen, 33442 Herzebrock-Clarholz (DE)

(56) Entgegenhaltungen:
- EP-A1- 0 461 269
- EP-A1- 1 921 384
- EP-A2- 0 459 305
- DE-A1-102007 035 357
- DE-B3-102005 018 015

## Beschreibung

Die vorliegende Erfindung betrifft ein Hausgerät mit wenigstens einem Behandlungsraum, mit einer Sensoreinrichtung, die eine Funkübertragungseinrichtung zur drahtlosen Signalübertragung umfasst, und mit einer Koppeleinrichtung wenigstens zur Übertragung elektromagnetischer Strahlung in den Behandlungsraum, wobei die Koppeleinrichtung zur Signalübertragung von einer Auswerteeinrichtung zu der Sensoreinrichtung und/oder umgekehrt dient, wobei die Koppeleinrichtung in einem Nebenraum angeordnet ist und der Nebenraum über wenigstens eine Trennwand von dem Behandlungsraum getrennt ist, und wobei die Koppeleinrichtung dazu ausgebildet ist, zwischen einer ersten metallischen Wand und einer benachbarten zweiten metallischen Wand ein elektromagnetisches Feld zu erzeugen.

Im Stand der Technik sind verschiedenste Hausgeräte bekannt geworden, bei denen einem Behandlungsraum elektromagnetische Strahlung zuführbar ist. Bei Gargeräten beispielsweise ist es möglich, einen Funksensor in dem Garraum zu platzieren, um die Temperatur in dem Garraum bzw. die in dem Gargut vorherrschende Temperatur per Funk zu erfassen und zu übertragen. Derartige Gargeräte aus dem Stand der Technik funktionieren grundsätzlich, erfordern jedoch einen gewissen baulichen und konstruktiven Aufwand.

Aus der DE 10 2005 018 015 B3 ist es bekannt, eine Sende- oder Empfangsantenne für eine Messeinrichtung in einer Beleuchtungseinrichtung anzuordnen.

Bei Mikrowellengeräten ist es bekannt, elektromagnetische Strahlung in einem Nebenraum zu erzeugen und über einen Kanal mit metallischen Wänden in den Behandlungsraum einzuspeisen, siehe beispielsweise EP 0 459 305 A2, EP 0 461 269 A1, DE 10 2007 035 357 A1.

Aus der EP 1 921 384 A1 ist es bekannt, IR-Sensoren, die als Abstands- oder Temperatursensoren verwendet werden, außerhalb des Garraums eines Gargeräts anzuordnen und deren Signale über einen Spiegel zu leiten.

Es ist die Aufgabe der vorliegenden Erfindung, ein Hausgerät zur Verfügung zu stellen, bei welchem die Übertragung elektromagnetischer Wellen bzw. Strahlung in den Behandlungsraum mit relativ einfachen Mitteln möglich ist. Vorzugsweise soll die Gestaltung optisch ansprechend erfolgen.

Diese Aufgabe wird gelöst durch ein Hausgerät mit den Merkmalen des Anspruchs 1. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Ein erfindungsgemäßes Hausgerät weist wenigstens einen Behandlungsraum mit einer Sensoreinrichtung auf, die eine Funkübertragungseinrichtung zur drahtlosen Signalübertragung umfasst, und eine Koppeleinrichtung zur Übertragung elektromagnetischer Strahlung in den Behandlungsraum. Die Koppeleinrichtung dient zur Signalübertragung von einer Auswerteeinrichtung zu der Sensoreinrichtung und/oder umgekehrt. Dabei ist die Koppeleinrichtung in einem Nebenraum angeordnet und der Nebenraum ist über wenigstens eine Trennwand von dem Behandlungsraum getrennt. Die Koppeleinrichtung ist dazu ausgebildet, zwischen einer ersten metallischen Wand und einer benachbarten zweiten metallischen Wand ein elektromagnetisches Feld zu erzeugen. Es ist wenigstens eine Öffnung vorgesehen, über welche wenigstens die Übertragung der elektromagnetischen Wellen bzw. Strahlung in den Behandlungsraum hinein erfolgt.

Dabei wird die Koppeleinrichtung über eine Koaxialverbindung mit einer geeigneten Sende- und/oder Empfangseinheit verbunden. Möglich sind auch andere Arten von hochfrequenztauglichen Verbindungen. In einfachen Ausgestaltungen ist die Koaxialverbindung als Koaxialkabel ausgeführt. Eine Seele der Koaxialverbindung ist mit der Koppeleinrichtung kapazitiv verbunden. Dabei kann insbesondere eine für Gleichstrom nicht leitende elektrische Verbindung bestehen. Beispielsweise kann die Seele der Koaxialverbindung an einen elektrischen Isolator grenzen, der Teil der Koppeleinrichtung ist. In entsprechender Weise ist eine Abschirmung oder wenigstens ein Teil der Abschirmung der Koaxialverbindung mit der Koppeleinrichtung kapazitiv verbunden. Auch hier ist er bevorzugt, dass die Abschirmung der Koaxialverbindung an einen elektrischen Isolator grenzt, der Teil der Koppeleinrichtung ist. Dadurch ist die Verbindung der Abschirmung mit der Koppeleinrichtung für elektrischen Gleichstrom ebenfalls nicht leitend.

Kapazitive Verbindungen der Seele der Koaxialverbindung und der Abschirmung der Koaxialverbindung mit entsprechenden unterschiedlichen Teilen der Koppeleinrichtung erlauben aber eine Stromleitung für insbesondere hochfrequenten Strom.

Hierzu ist die erste Wand mit der Seele (oder der Abschirmung) der Koaxialverbindung gekoppelt und die zweite Wand ist mit der Abschirmung (oder der Seele) der Koaxialverbindung verbunden. Dadurch wird ein Teil der Koaxialverbindung mit der ersten Wand und der andere Teil der Koaxialverbindung wird mit der zweiten Wand besonders bevorzugt kapazitiv verbunden.

Eine solche Ausgestaltung ermöglicht eine einfache und kostengünstige Montage, während gleichzeitig eine zuverlässige Funktion sichergestellt wird. Beispielsweise können die erste und die zweite Wand jeweils mit Isolierschichten versehen sein. Eine solche Isolierschicht kann beispielsweise eine Emailleschicht oder eine sonstige Schicht sein, wie sie an den Innenwänden von Garräumen bevorzugt eingesetzt werden, um beispielsweise eine einfachere Reinigung der Wände zu ermöglichen.

Durch die kapazitive Koppelung der Koaxialverbindung mit der ersten Wand und insbesondere auch der zweiten Wand der Koppeleinrichtung erfolgt eine zuverlässige Hochfrequenzverbindung.

Beispielsweise kann die Seele und/oder die Abschirmung der Koaxialverbindung mit der ersten und/oder der zweiten Wand der Koppeleinrichtung verschraubt werden. Bei einer solchen Verschraubung kann eine metallische Verbindung der Seele und/oder der Abschirmung zu den Wänden der Koppeleinrichtung vorliegen. Es ist jedoch auch möglich, dass eine nicht-leitende Verbindung vorliegt. Durch die kapazitive Koppelung wird die Funktion auch bei dem Vorhandensein von Isolierschichten oder Keramikschichten oder dergleichen sichergestellt, da eine solche Isolierschicht nur einen geringen Widerstand für hochfrequenten Strom darstellt.

Das erfindungsgemäße Hausgerät hat viele Vorteile, da es einen relativ einfachen Aufbau ermöglicht. Weiterhin ist eine ansprechende optische Gestaltung möglich. Dadurch, dass die Koppeleinrichtung in einem Nebenraum angeordnet ist, kann der Behandlungsraum gegebenenfalls vollständig frei von Elementen der Koppeleinrichtung gehalten werden, sodass bei einem Blick in den Behandlungsraum die Koppeleinrichtung insgesamt nicht sichtbar ist. Außerdem wird ein einfacher Aufbau ermöglicht, da die Koppeleinrichtung in dem Nebenraum angeordnet ist. Derartige Nebenräume sind in vielen Fällen schon vorhanden und können so doppelt genutzt werden, indem der Nebenraum zur Aufnahme der Koppeleinrichtung ausgebildet wird.

Besonders bevorzugt ist die Koppeleinrichtung außerhalb des einsehbaren Teils des Behandlungsraums angeordnet und insbesondere ist jedes einzelne Teil der Koppeleinrichtung außerhalb des einsehbaren Teils des Behandlungsraumes angeordnet.

In allen Ausgestaltungen ist es bevorzugt, dass wenigstens eine Öffnung als Spalt ausgebildet ist. Gute Ergebnisse wurden mit schlitzartigen Spalten erzielt.

Vorzugsweise ist wenigstens eine Öffnung zwischen der Trennwand und einer Wand des Behandlungsraumes angeordnet. Eine solche Ausgestaltung ist sehr vorteilhaft, da die Trennwand nur etwas kleiner dimensioniert werden muss als der Querschnitt des Behandlungsraumes an der Trennwand. Beispielsweise ist es auch möglich, dass zwei oder mehr Spalte an der Trennwand vorgesehen sind. Beispielsweise kann an gegenüberliegenden Seiten jeweils ein Spalt vorgesehen sein. Möglich ist es aber auch, dass auf der Trennwand selbst Öffnungen und/oder Spalte vorgesehen sind, um wenigstens elektromagnetische Wellen bzw. Strahlung von dem Nebenraum in dem Behandlungsraum einzukoppeln.

Die Koppeleinrichtung kann auch als Anschlusseinrichtung bezeichnet werden.

In besonders bevorzugten Ausgestaltungen wird die erste Wand durch die Trennwand gebildet. Bevorzugt ist es auch, dass die zweite Wand durch eine Wandung des Nebenraumes gebildet wird. Beispielsweise ist es möglich, dass die erste Wand durch die Trennwand und die zweite Wand durch die Rückwand des Nebenraumes gebildet wird. Eine solche Ausgestaltung ist besonders vorteilhaft, da schon vorhandene Wände genutzt werden, um als Teile der Koppeleinrichtung doppelt genutzt zu werden.

Möglich ist es aber auch, dass eine zusätzliche Wand oder sogar zwei zusätzliche Wände in dem Nebenraum eingestellt werden und als benachbarte metallische Wände der Koppeleinrichtung zu dienen. Insbesondere sind die erste Wand und die zweite Wand wenigstens im Wesentlichen parallel zueinander ausgerichtet. Eine leichte Winkelabweichung zur parallelen Ausrichtung kann vorliegen.

Vorteilhafterweise ist die erste Wand mit der zweiten Wand an seitlichen Verbindungspunkten verbunden. Die Verbindungspunkte können auch für einen definierten Abstand der beiden Wände zueinander sorgen.

Vorteilhafterweise ist ein seitlicher Abstand der Verbindungspunkte, insbesondere der seitliche Abstand der Verbindungspunkte zueinander, und/oder eine seitliche Breite der ersten und/oder der zweiten Wand größer als ein Bruchteil und insbesondere wenigstens etwa die Hälfte der Freiraumwellenlänge der elektromagnetischen Wellen bzw. Strahlung. Vorteilhaft ist ein seitlicher Abstand der Verbindungspunkte und insbesondere der Länge der ersten und der zweiten Wand, die der Hälfte der Freiraumwellenlänge der elektromagnetischen Strahlung entspricht. Funktionstüchtig wird eine derartige Koppeleinrichtung auch, wenn der seitliche Abstand der Verbindungspunkte bzw. die Länge der ersten und der zweiten Wand größer als die Hälfte der Freiraumwellenlänge der elektromagnetischen Strahlung ist. Ein Abstand zwischen etwa einem Drittel und zwei Dritteln der Freiraumwellenlänge der elektromagnetischen Strahlung kann in einigen Anwendungsfällen zu noch zufriedenstellenden Ergebnissen führen.

In bevorzugten Weiterbildungen ist wenigstens eine Heizquelle zur Beheizung des Behandlungsraumes vorgesehen. Vorzugsweise wird wenigstens eine Heizquelle einer Gruppe von Heizquellen entnommen, welche thermische Heizkörper, Dampferzeuger, Mikrowellenquellen und dergleichen mehr umfasst. Ein solches Hausgerät kann beispielsweise als Gargerät ausgeführt sein. Möglich ist der Einsatz aber auch beispielsweise bei Spülmaschinen oder Waschmaschinen oder dergleichen.

In allen Ausgestaltungen kann die Koppeleinrichtung zur Einkoppelung elektromagnetischer Strahlung in den Behandlungsraum dienen. Die Koppeleinrichtung kann allerdings auch zur Auskoppelung von elektromagnetischer Strahlung aus dem Behandlungsraum dienen.

In besonders bevorzugten Ausgestaltungen ist das Hausgerät zur Aufnahme einer Sensoreinrichtung ausgestaltet, bei der die zur Messung und zur Signalübertragung erforderliche Energie über die Koppeleinrichtung zur Verfügung gestellt wird. Das von der Sensoreinrichtung detektierte Sensorsignal wird von der Sensoreinrichtung wieder ausgestrahlt und durch die Koppeleinrichtung erfasst. Die Auswerteeinrichtung erfasst das übertragene Signal und wertet es aus.

Vorzugsweise weist das Hausgerät ein Gehäuse und der Behandlungsraum weist eine Tür auf, mit der der Behandlungsraum wenigstens teilweise verschließbar ist. Das Hausgerät kann insbesondere als Gargerät ausgeführt sein, wobei der Behandlungsraum dann als Garraum ausgebildet ist.

Das Hausgerät kann in dem Nebenraum einen Heizkörper und ein Umluftgebläse aufweisen. In der Trennwand können Löcher vorgesehen sein, um Luft durch die Trennwand anzusaugen oder durchzupusten. Bei einer solchen Ausgestaltung kann die Trennwand als Heizluftrückwand dienen.

Weiter Vorteile und Eigenschaften der vorliegenden Erfindung ergeben sich aus den Ausführungsbeispielen, die im Folgenden mit Bezug auf die beiliegenden Figuren erläutert werden.

In den Figuren zeigen:
- Figur 1: eine schematische perspektivische Darstellung eines ersten erfindungsgemäßen Hausgerätes;
- Figur 2: einen stark schematisierten Schnitt durch eine Seitenansicht eines weiteren erfindungsgemäßen Gargerätes;
- Figur 3: einen schematischen horizontalen Querschnitt durch das Hausgerät gemäß Figur 1 oder 2;
- Figur 4: eine stark vergrößerte Darstellung der Ankoppelung der Koaxialverbindung des Hausgerätes nach Figur 2.

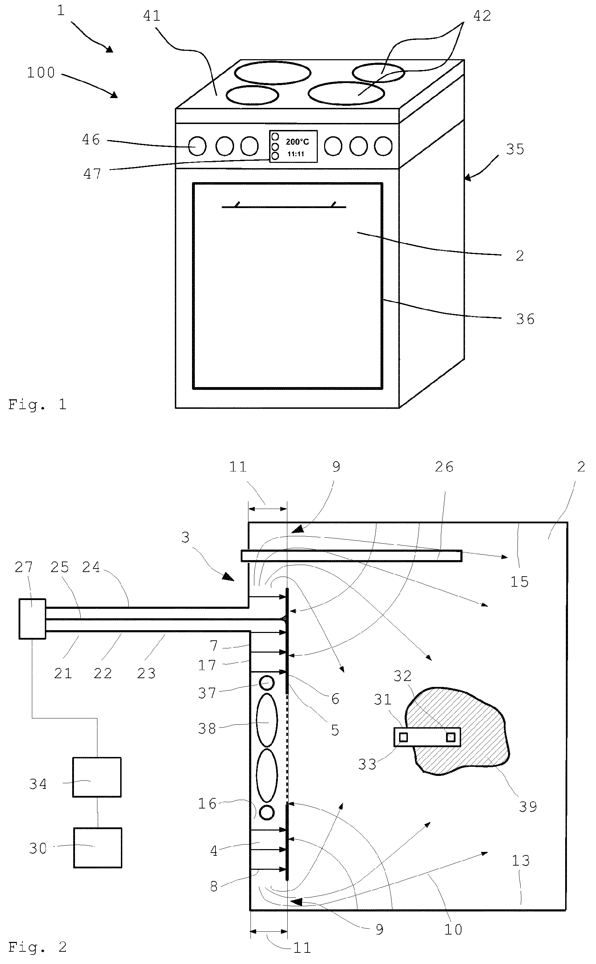

In Figur 1 ist in einer perspektivischen Darstellung ein Hausgerät 1 abgebildet, welches hier als Gargerät 100 ausgeführt ist. Das Gargerät 100 verfügt über einen hier als Garraum ausgebildeten Behandlungsraum 2.

Das Gargerät 100 weist ein Gehäuse 35 auf, an dem der Garraum 2 vorgesehen ist. Der Garraum 2 ist über eine Tür 36 verschließbar.

Das Gargerät 100 ist hier als Standgerät ausgeführt und verfügt neben dem Garraum 2 noch über ein Kochfeld 41, an dem mehrere Kochstellen 42 vorgesehen sind. Bedienknöpfe 46 dienen zur Steuerung und eine Anzeige 47 kann das eingestellte Garprogramm und/oder Informationen über den Garprozess und dergleichen anzeigen.

In Figur 2 ist eine stark schematische Darstellung eines Gargerätes 100 in einer geschnittenen Seitenansicht dargestellt. Das stark schematische dargestellte Gargerät ist hier als Einbaugerät ausgeführt und verfügt ebenfalls über einen Garraum 2.

Der Behandlungsraum 2 ist über eine Trennwand 5 von einem Nebenraum 4 getrennt. Die Trennwand 5 kann auch als Heizluftrückwand bezeichnet werden, da hinter der Trennwand 5 in dem Nebenraum 4 ein Heizkörper 37 vorgesehen ist, der hier ringförmig ein Umluftgebläse 38 umgibt. Im Bereich des Umluftgebläses 38 ist die Trennwand 5 mit kleinen Öffnungen versehen, die den Durchtritt von Luft ermöglichen.

Des Weiteren verfügt das Gargerät 100 aus Figur 2 über eine Heizquelle 26, die hier beispielsweise als Oberhitzeheizkörper ausgeführt ist. Möglich ist es auch, dass weiter Heizquellen, wie ein Unterhitzeheizkörper, eine Dampfquelle und eine Mikrowellenquelle unter dergleichen vorgesehen sind.

Eine Sende-und/oder Empfangseinheit 27 ist vorgesehen, die über eine hochfrequenztaugliche Verbindung 21 an die Koppeleinrichtung 3 angeschlossen ist. Die hochfrequenztaugliche Verbindung 21 ist hier als Koaxialverbindung 22 und insbesondere als Koaxialkabel 23 ausgeführt.

Die äußere Abschirmung 24 des Koaxialkabels 23 ist hier kapazitiv mit der Rückwand 17 verbunden, die hier als zweite Wand 7 dient. Die Seele 25 des Koaxialkabels 23 ist durch eine Öffnung in der Rückwand 17 durchgeführt und kapazitiv mit der Trennwand 5 gekoppelt. Die Trennwand 5 dient als erste Wand 6 der Koppeleinrichtung 3. Sowohl die erste Wand 6 als auch die zweite Wand 7 der Koppeleinrichtung 3 weisen wenigstens eine metallische Schicht auf. Die erste Wand 6 und die zweite Wand 7 können aber zusätzlich auch mit elektrischen Isolierschichten bedeckt oder versehen sein.

Über die Koaxialverbindung 22 steht die Sende- und/oder Empfangseinheit 27 mit der Koppeleinrichtung 3 in Verbindung. Ein ausgesendetes Signal wird über die Seele 25 und über die Abschirmung 24 mit der ersten Wand 6 und der zweiten Wand 7 kapazitiv gekoppelt. Dadurch bildet sich an der Koppeleinrichtung 3 und hier praktisch über den vollständigen Nebenraum 4 ein elektrisches Feld 8 aus, dessen Feldvektoren hier von der zweiten Wand 7 zu der ersten Wand 6 zeigen. Der elektrische Feldstärkevektor ist in dem Nebenraum etwa senkrecht zu den beiden Wänden 6 und 7 gerichtet. Die Leistungsdichte 10 bzw. Leistungsflussdichte (Poyntingscher Vektor) steht senkrecht zum elektrischen Feldstärkevektor, sodass in dem Nebenraum die Leistungsdichte 10 zunächst parallel zwischen der ersten Wand 6 und der zweiten Wand 7 gerichtet ist.

Öffnungen 9, die hier als insbesondere umlaufender Spalt 11 ausgebildet sind, ermöglichen eine im Wesentlichen gleichförmige Feldanregung des Behandlungsraums 2 durch Einkopplung der Leistungsdichte 10 von der Koppeleinrichtung 3 über die Spalte 11 in den Behandlungsraum 2 hinein.

Schematisch eingezeichnet ist in Fig. 2 ein Gargut 39, in das eine Sensoreinrichtung 31 wenigstens teilweise eingeführt wurde. Die Sensoreinrichtung 31 verfügt über einen Sensor 32 und eine Funkübertragungseinrichtung 33. Möglich ist es, dass die Sensoreinrichtung über einen Energiespeicher, wie beispielsweise einen Kondensator oder eine Batterie, verfügt und somit ohne weitere Energiezufuhr selbstständig messen kann. Zu geeigneten Zeitpunkten kann die Sensoreinrichtung 31 Funksignale aussenden, die dann von der Koppeleinrichtung 3 erfasst und über die hochfrequenztaugliche Verbindung 21 zu der Empfangseinheit 27 geleitet werden. Dort werden die empfangenen Signale zu der Auswerteeinrichtung 34 geleitet und ausgewertet. Die Auswerteeinrichtung kann Teil einer Steuereinrichtung 30 oder separat ausgebildet sein.

Bevorzugt ist es, dass die Sensoreinrichtung 31 die zum Messen und zur Funkübertragung erforderliche Energie von dem Hausgerät 1 bezieht. Dabei dient die Koppeleinrichtung zum Senden elektromagnetischer Energie zu der Sensoreinrichtung 31, die die aufgenommene elektromagnetische Strahlung zur Durchführung der Messung und zur Zurücksendung des Funksignals nutzt.

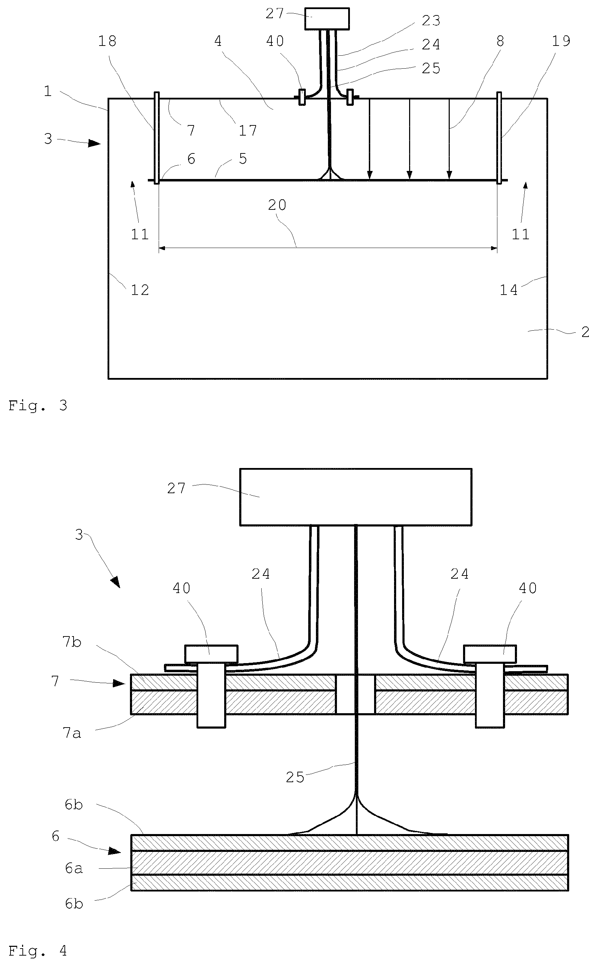

Vorzugsweise wird der Spalt 11 zwischen der Trennwand 5 und der Bodenwand 13 und zwischen der Trennwand 5 und der Deckenwand 15, sowie zwischen der Trennwand 5 und den Seitenwänden 12 und 14 (vgl. Fig. 3) gebildet.

Fig. 3 zeigt einen etwa horizontalen Querschnitt durch ein als Gargerät 100 ausgeführtes Hausgerät 1 in einer stark schematisierten Darstellung. Der Behandlungsraum 2 ist über eine eingestellte Rückwand 5 von einem Nebenraum 4 getrennt, in dem die Koppeleinrichtung 3 angeordnet ist. Die Trennwand 5 wird über Verbindungspunkte 18 und 19 an der Rückwand 17 befestigt. Der seitliche Abstand 20 der Verbindungspunkte und/oder die seitliche Länge der Trennwand 5 beträgt vorzugsweise etwa die Hälfte der Freiraumwellenlänge der eingekoppelten elektromagnetischen Wellen. Möglich ist es auch, dass der seitliche Abstand 20 einem ganzzahligem Vielfachen der Hälfte der Freiraumwellenlänge der elektromagnetischen Wellen entspricht. Über den umlaufenden Spalt 11 wird die Leistungsdichte 10 in den Behandlungsraum 2 eingebracht. Das entsprechende Rücksignal der Sensoreinrichtung 31 wird dementsprechend von der Koppeleinrichtung 3 aufgenommen und an die Empfangseinheit 27 weitergeleitet.

Die Sende- und/oder Empfangseinheit 27 ist über die Koaxialverbindung 22 mit der Koppeleinrichtung 3 gekoppelt. Dabei wird die Seele 25 des Koaxialkabels 23 durch eine Öffnung in der Rückwand 17 durchgeleitet und kapazitiv mit der Trennwand 5 gekoppelt. Die Abschirmung 24 des Koaxialkabels 23 wird kapazitiv mit der Rückwand 17 gekoppelt. Anders als im hier dargestellten Beispiel kann die Abschirmung 24 des Koaxialkabels 23 statt an der Rückseite der Rückwand 17 auch an der Vorderseite der Rückwand 17 mit der Rückwand 17 gekoppelt sein.

Bei der Kopplung der Seele 25 mit der Trennwand 5 und bei der Kopplung der Abschirmung 24 mit der Rückwand 17 kann jeweils eine elektrisch leitende Verbindung vorliegen. Es ist aber auch möglich und bevorzugt, dass zwischen der Seele 25 und der ersten Wand 6 und/oder zwischen der Abschirmung 24 und der zweiten Wand 7 jeweils eine Isolierschicht vorgesehen ist und somit eine rein kapazitive Kopplung erfolgt.

Die Seele 25 kann über einen Federmechanismus elastisch federnd gegen die erste Wand 6 gedrückt werden. Die Abschirmung 24 kann direkt über ein Halteblech oder dergleichen mit der zweiten Wand 7 bzw. mit der Rückwand 17 verschraubt werden. Dabei ist es nicht nötig, eine eventuelle Emailleschicht oder dergleichen von der Rückwand an der Stelle zu entfernen, wo die Abschirmung kapazitiv an die Rückwand 17 gekoppelt wird. Möglich ist es aber auch, dass die Abschirmung 24 über den gleichen oder einen anderen Federmechanismus elastisch federnd gegen die zweite Wand 7 gedrückt wird.

Fig. 4 zeigt die kapazitive Kopplung der Seele 25 an die erste Wand 6 und die kapazitive Kopplung der Abschirmung 24 an die zweite Wand 7 in vergrößerter schematischer Darstellung. Dabei weisen die erste Wand 6 und die zweite Wand 7 jeweils eine metallische Wandung 6a bzw. 7a auf. Zusätzlich sind auf der ersten Wand 6 und der zweiten Wand 7 jeweils noch eine Isolierschicht 6b bzw. 7b vorgesehen. Die Abschirmung 24 kann über Schrauben 40 mit der zweiten Wand 7 verschraubt werden. Durch die Isolierschicht 7b zwischen der Abschirmung 24 und der metallisch leitenden Schicht 7a der zweiten Wand 7 wird eine direkt leitende metallische Verbindung verhindert. Durch die kapazitive Kopplung kann der Hochfrequenzstrom kapazitiv sowohl in die erste Wand 6 als auch in die zweite Wand 7 eingebracht werden.

Dadurch, dass die Seele 25 hier federelastisch gegen die erste Wand 6 gedrückt wird, kann der Benutzer beispielsweise zu Reinigungs- oder Wartungszwecken das Hausgerät 1 öffnen und die Trennwand 5 entnehmen. Eine separate Demontage über eine Schraubverbindung oder dergleichen ist zur Abkopplung der Seele 25 von der ersten Wand 6 nicht nötig.

Vorteilhaft ist auch, dass beim Einsehen in den Behandlungsraum 2 nur die Trennwand 5 mit dem umlaufenden Spalt 11 sichtbar ist. Ansonsten ist keinerlei Teil der Koppeleinrichtung 3 sichtbar, sodass ein optisch ansprechender Gesamteindruck entsteht. Eine Antenne ist beispielsweise nicht sichtbar. Außerdem ist der konstruktive Aufbau des Gargerätes 100 einfach. Der Nebenraum 4 wird nicht nur zur Einkoppelung der elektromagnetischen Strahlung, sondern auch für das Heißluftgebläse verwendet.

In anderen Ausgestaltungen ist es gegebenenfalls auch möglich, das über die Koppeleinrichtung 4 elektromagnetische Strahlung zu Heizzwecken in den Behandlungsraum 2 eingebracht wird.

Die Geometrien der Öffnungen 9 bzw. Spalte 11 kann grundsätzlich beliebig sein. Die Spalte können gradlinig oder auch nicht gradlinig ausgeführt sein.

### Bezugszeichenliste

- 1: Hausgerät
- 2: Behandlungsraum, Garraum
- 3: Koppeleinrichtung
- 4: Nebenraum
- 5: Trennwand
- 6: erste Wand = Trennwand 5
- 6a: Metallwandung
- 6b: Isolierschicht
- 7: zweite Wand = Rückwand 17
- 7a: Metallwandung
- 7b: Isolierschicht
- 8: elektrisches Feld
- 9: Öffnung
- 11: Spalt
- 12: Wand (linke Seitenwand)
- 13: Wand (Boden)
- 14: Wand (rechte Seitenwand)
- 15: Wand (Decke)
- 16: Wandung
- 17: Rückwand
- 18: Verbindungspunkt
- 19: Verbindungspunkt
- 20: Abstand
- 21: hochfrequenztaugliche Verbindung
- 22: Koaxialverbindung
- 23: Koaxialkabel
- 24: Abschirmung
- 25: Seele
- 26: Heizquelle
- 27: Sende- und/oder Empfangseinheit
- 30: Steuereinrichtung
- 31: Sensoreinrichtung
- 32: Sensor
- 33: Funkübertragungseinrichtung
- 34: Auswerteeinrichtung
- 35: Gehäuse
- 36: Tür
- 37: Heizkörper
- 38: Umluftgebläse
- 39: Gargut
- 40: Schraube
- 41: Kochfeld
- 42: Kochstelle
- 46: Bedienknopf
- 47: Anzeige
- 100: Gargerät

## Patentansprüche

1. Hausgerät (1) mit wenigstens einem Behandlungsraum (2), mit einer Sensoreinrichtung (31), die eine Funkübertragungseinrichtung (33) zur drahtlosen Signalübertragung umfasst, und mit einer Koppeleinrichtung (3) wenigstens zur Übertragung elektromagnetischer Strahlung in den Behandlungsraum (2), wobei die Koppeleinrichtung (3) zur Signalübertragung von einer Auswerteeinrichtung (34) zu der Sensoreinrichtung (31) und/oder umgekehrt dient, wobei die Koppeleinrichtung (3) in einem Nebenraum (4) angeordnet ist und der Nebenraum (4) über wenigstens eine Trennwand (5) von dem Behandlungsraum (2) getrennt ist, und wobei die Koppeleinrichtung (3) dazu ausgebildet ist, zwischen einer ersten metallischen Wand (6) und einer benachbarten zweiten metallischen Wand (7) ein elektromagnetisches Feld (8) zu erzeugen,
**dadurch gekennzeichnet,**
**dass** die Koppeleinrichtung (3) über eine Seele (25) und eine Abschirmung (24) einer Koaxialverbindung (22) mit einer geeigneten Sende- und/oder Empfangseinheit (27) dadurch verbunden ist, dass die erste Wand (6) mit der Seele (25) oder der Abschirmung (24) und die zweite Wand (7) entsprechend mit der Abschirmung (25) oder der Seele (24) kapazitiv verbunden ist,
und **dass** wenigstens eine Öffnung (9) vorgesehen ist, über welche wenigstens die Übertragung der elektromagnetischen Strahlung in den Behandlungsraum (2) erfolgt.

2. Hausgerät (1) nach Anspruch 1, **dadurch gekennzeichnet, dass** die Koppeleinrichtung (3) außerhalb des einsehbaren Teils des Behandlungsraums (2) angeordnet ist.

3. Hausgerät (1) nach Anspruch 1 oder 2, **dadurch gekennzeichnet, dass** wenigstens eine Öffnung (9) als Spalt (11) ausgebildet ist.

4. Hausgerät (1) nach einem der vorhergehenden Ansprüche, **dadurch gekennzeichnet, dass** wenigstens eine Öffnung (9) zwischen der Trennwand (5) und einer Wand (12, 13, 14, 15) des Behandlungsraums (2) angeordnet ist.

5. Hausgerät (1) nach dem vorhergehenden Anspruch, **dadurch gekennzeichnet, dass** die erste Wand (6) durch die Trennwand (5) gebildet wird.

6. Hausgerät (1) nach einem der beiden vorhergehenden Ansprüche, **dadurch gekennzeichnet, dass** die zweite Wand (7) durch eine Wandung (16) des Nebenraumes (4) gebildet wird.

7. Hausgerät (1) nach einem der drei vorhergehenden Ansprüche, **dadurch gekennzeichnet, dass** die erste Wand (6) mit der zweiten Wand (7) an seitlichen Verbindungspunkten (18, 19) verbunden ist.

8. Hausgerät (1) nach dem vorhergehenden Anspruch, wobei ein seitlicher Abstand (20) der Verbindungspunkte (18, 19) größer als ein Bruchteil und insbesondere wenigstens etwa die Hälfte der Freiraumwellenlänge der elektromagnetischen Strahlung beträgt.

9. Hausgerät (1) nach einem der vorhergehenden Ansprüche, **dadurch gekennzeichnet, dass** wenigstens eine Heizquelle (26) zur Beheizung des Behandlungsraumes (2) vorgesehen ist, wobei wenigstens eine Heizquelle (26) einer Gruppe von Heizquellen entnommen ist, welche thermische Heizkörper, Dampferzeuger, Mikrowellenquellen und dergleichen mehr umfasst.

10. Hausgerät (1) nach einem der vorhergehenden Ansprüche, **dadurch gekennzeichnet, dass** ein Gehäuse (35) vorgesehen ist und/oder dass der Behandlungsraum (2) eine Tür (36) aufweist und/oder dass der Behandlungsraum (2) als Garraum ausgebildet ist.

11. Hausgerät (1) nach dem vorhergehenden Anspruch, **dadurch gekennzeichnet, dass** in dem Nebenraum (4) ein Heizkörper (37) und ein Umluftgebläse (38) vorgesehen sind.

## Claims

1. Domestic appliance (1) comprising at least one processing chamber (2), a sensor device (31) which comprises a radio transmission device (33) for wirelessly transmitting signals, and a coupling device (3) at least for transmitting electromagnetic radiation to the processing chamber (2), the coupling device (3) being used to transmit signals from an evaluation device (34) to the sensor device (31) and/or vice versa, the coupling device (3) being arranged in an auxiliary chamber (4) and the auxiliary chamber (4) being separated from the processing chamber (2) by means of at least one partition (5), and the coupling device (3) being designed to generate an electromagnetic field (8) between a first metallic wall (6) and an adjacent second metallic wall (7), **characterised in that** the coupling device (3) is connected to a suitable transmitting and/or receiving unit (27) by means of a core (25) and a shield (24) of a coaxial connection (22) **in that** the first wall (6) is capacitively connected to the core (25) or to the shield (24), and the second wall (7) is correspondingly capacitively connected to the shield (25) or to the core (24), and **in that** at least one opening (9) is provided, by means of which at least the electromagnetic radiation is transmitted to the processing chamber (2).

2. Domestic appliance (1) according to claim 1, **characterised in that** the coupling device (3) is arranged outside the visible part of the processing chamber (2).

3. Domestic appliance (1) according to either claim 1 or claim 2, **characterised in that** at least one opening (9) is formed as a gap (11).

4. Domestic appliance (1) according to any of the preceding claims, **characterised in that** at least one opening (9) is arranged between the partition (5) and a wall (12, 13, 14, 15) of the processing chamber (2).

5. Domestic appliance (1) according to the preceding claim, **characterised in that** the first wall (6) is formed by the partition (5).

6. Domestic appliance (1) according to either of the two preceding claims, **characterised in that** the second wall (7) is formed by a wall (16) of the auxiliary chamber (4).

7. Domestic appliance (1) according to any of the three preceding claims, **characterised in that** the first wall (6) is connected to the second wall (7) at lateral connection points (18, 19).

8. Domestic appliance (1) according to the preceding claim, wherein a lateral spacing (20) between the connection points (18, 19) is greater than a fraction of the free space wavelength of the electromagnetic radiation, in particular at least approximately half thereof.

9. Domestic appliance (1) according to any of the preceding claims, **characterised in that** at least one heat source (26) is provided for heating the processing chamber (2), at least one heat source (26) being taken from a group of heat sources comprising thermal heating elements, steam generators, microwave sources and the like.

10. Domestic appliance (1) according to any of the preceding claims, **characterised in that** a housing (35) is provided and/or **in that** the processing chamber (2) comprises a door (36) and/or **in that** the processing chamber (2) is formed as a cooking chamber.

11. Domestic appliance (1) according to the preceding claim, **characterised in that** a heating element (37) and a circulation fan (38) are provided in the auxiliary chamber (4).

## Revendications

1. Appareil électroménager (1) avec au moins un espace de traitement (2), avec un dispositif de capteur (31) qui comprend un dispositif de transmission radio (33) pour la transmission de signaux sans fil, et avec un dispositif de couplage (3) au moins pour la transmission de rayonnement électromagnétique vers l'espace de traitement (2), dans lequel le dispositif de couplage (3) sert à la transmission de signaux à partir d'un dispositif d'analyse (34) vers le dispositif de capteur (31) et/ou inversement, dans lequel le dispositif de couplage (3) est disposé dans un espace annexe (4) et l'espace annexe (4) est séparé de l'espace de traitement (2) par le biais d'au moins une cloison (5), et dans lequel le dispositif de couplage (3) est constitué pour produire un champ électromagnétique (8) entre une première paroi (6) métallique et une deuxième paroi (7) métallique voisine, **caractérisé en ce que** le dispositif de couplage (3) est, par le biais d'une âme (25) et d'un écran (24) d'une connexion coaxiale (22), raccordé à une unité d'émission et/ou de réception (27) appropriée par le fait que la première paroi (6) est raccordée de façon capacitive à l'âme (25) ou à l'écran (24), et la deuxième paroi (7) est raccordée de façon capacitive en conséquence à l'écran (25) ou à l'âme (24), et **en ce qu'**il est prévu au moins une ouverture (9) par le biais de laquelle s'effectue au moins la transmission du rayonnement électromagnétique vers l'espace de traitement (2).

2. Appareil électroménager (1) selon la revendication 1, **caractérisé en ce que** le dispositif de couplage (3) est disposé à l'extérieur de la partie visible de l'espace de traitement (2).

3. Appareil électroménager (1) selon la revendication 1 ou 2, **caractérisé en ce qu'**au moins une ouverture (9) est constituée en tant qu'interstice (11).

4. Appareil électroménager (1) selon l'une des revendications précédentes, **caractérisé en ce qu'**il est disposé au moins une ouverture (9) entre la cloison (5) et une paroi (12, 13, 14, 15) de l'espace de traitement (2).

5. Appareil électroménager (1) selon la revendication précédente, **caractérisé en ce que** la première paroi (6) est formée par la cloison (5).

6. Appareil électroménager (1) selon l'une des deux revendications précédentes, **caractérisé en ce que** la deuxième paroi (7) est formée par une paroi (16) de l'espace annexe (4).

7. Appareil électroménager (1) selon l'une des trois revendications précédentes, **caractérisé en ce que** la première paroi (6) est raccordée à la deuxième paroi (7) au niveau de points de raccordement (18, 19) latéraux.

8. Appareil électroménager (1) selon la revendication précédente, dans lequel une distance (20) latérale des points de raccordement (18, 19) est plus grande qu'une fraction, et en particulier au moins à peu près égale à la moitié, de la longueur d'onde en espace libre du rayonnement électromagnétique.

9. Appareil électroménager (1) selon l'une des revendications précédentes, **caractérisé en ce qu'**il est prévu au moins une source de chauffage (26) pour le chauffage de l'espace de traitement (2), dans lequel au moins une source de chauffage (26) est prélevée dans un groupe de sources de chauffage qui comprend des corps de chauffage thermiques, des générateurs de vapeur, des sources micro-ondes et encore d'autres éléments similaires.

10. Appareil électroménager (1) selon l'une des revendications précédentes, **caractérisé en ce qu'**il est prévu une enceinte (35) et/ou **en ce que** l'espace de traitement (2) présente une porte (36) et/ou **en ce que** l'espace de traitement (2) est constitué en tant qu'espace de cuisson.

11. Appareil électroménager (1) selon la revendication précédente, **caractérisé en ce qu'**il est prévu un corps de chauffage (37) et un ventilateur de circulation d'air (38) dans l'espace annexe (4).
